# EUROPÄISCHE PATENTSCHRIFT

(11) **EP 0 670 335 B1**
(45) Veröffentlichungstag und Bekanntmachung des Hinweises auf die Patenterteilung: **13.05.1998**
(21) Anmeldenummer: 95102329.0
(22) Anmeldetag: 20.02.1995
(51) Int. Cl.: C08F 8/12, C08F 8/44

(54) **Superabsorbierende Polymerisate**
Superabsorbent polymers
Polymères superabsorbants

(30) Priorität: 03.03.1994 DE 4406951
(43) Veröffentlichungstag der Anmeldung: 06.09.1995
(73) Patentinhaber: BAYER AG, 51368 Leverkusen (DE)
(72) Erfinder: Sackmann, Günter, Dr., D-51379 Leverkusen (DE); Meyer, Rolf-Volker, Dr., D-51373 Leverkusen (DE); Korte, Siegfried, Dr., D-51519 Odenthal (DE); Schapowalow, Sergej, Dr., D-51373 Leverkusen (DE)

(56) Entgegenhaltungen:
- EP-A- 0 047 381
- EP-A- 0 170 081
- EP-A- 0 241 885
- DE-A- 2 028 956
- DE-A- 2 337 505
- GB-A- 1 104 567
- US-A- 3 929 740

## Beschreibung

Die Erfindung betrifft die Herstellung von superabsorbierenden Polymerisaten in Pulverform mit extrem hohem Quellungsvermögen.

Superabsorbierende Polymerisate sind bekannt und werden hauptsächlich bei der Herstellung von Windeln und Inkontinenzartikeln, aber auch als wasserspeichernde Materialien in der Landwirtschaft sowie bei der Ummantelung von Elektrokabeln verwendet. In der Regel sind diese superabsorbierenden Polymerisate weitmaschig vernetzte, wasserunlösliche Polymerisate auf Basis von Alkalisalzen der Polyacrylsäure oder Copolymerisate von Alkalisalzen der Acrylsäure und Acrylamid, die durch radikalisch initiierte Copolymerisation von Acrylsäure und polyfunktionellen Monomeren, wie Divinylbenzol, Ethylenglykoldimethacrylat, Ethylenglykoldiallylether, Butandiolacrylat, Hexandiolmethacrylat, Polyglykoldiacrylat, Trimethylolpropandiacrylat, Allylacrylat, Diallylacrylamid, Triallylamin, Diallylether, Methylenbisacrylamid und N-Methylolacrylamid, erhalten werden. Aufgrund ihrer Struktur sind solche Polymerisate in der Lage, unter Quellung und Ausbildung von Hydrogelen große Mengen an Flüssigkeiten aufzunehmen und diese auch unter Druck festzuhalten. Nach DE-OS 2 028 956 lassen sich solche Hydrogele auch durch saure Hydrolyse vernetzter PAN-Polymerisate in Gegenwart von ZuCl₂ erhalten.

Es gibt auch superabsorbierende Polymerisate, die auf Hydrolysaten von Pfropfcopolymerisaten des Acrylnitrils auf Stärke sowie auf vernetzten Stärke-Acrylsäure-Pfropfcopolymerisaten, bei denen die Carboxylgruppen teilweise neutralisiert sind, basieren.

Auch die saure oder alkalische Hydrolyse von Polyacrylnitril führt zu Polymeren mit Carboxyl- bzw. Carboxylatgruppen (z.B. DE-OS 2 337 505). Diese sind in der Regel wasserlöslich (und daher nicht quellbar), denn das als Ausgangsprodukt eingesetzte und durch Fällungspolymerisation gewonnene Polyacrylnitril hat ein zu niedriges Molekulargewicht.

EP-A 241 885 beschreibt wasserquellbare Zusammensetzungen, die durch alkalische Hydrolyse von Mischungen aus Acrylnitrilpolymerisaten und inerten Metalloxiden hergestellt werden.

Erfindungsgemäß können aus unvernetzten wäßrigen Acrylnitrilpolymerisat-Emulsionen superabsorbierende Polymerisate mit extrem hohem Quellungsvermögen hergestellt werden.

Gegenstand der Erfindung ist somit ein Verfahren zur Herstellung von superabsorbierenden Polymerisaten mit einem Quellvermögen für wäßrige Flüssigkeiten bis zu 1.000 g/g und für Elektrolytlösungen bis zu 90 g/g, worin man wäßrige Emulsionen von besonders hochmolekularen Homo- und/oder Copolymerisaten des Acrylnitrils durch Umsetzung mit wäßrigen Lösungen von Alkalihydroxiden partiell hydrolysiert, die Polymerisate durch Zugabe von mit Wasser mischbaren organischen Lösungsmitteln als Pulver ausfällt, abtrennt, trocknet und dann gegebenenfalls für eine kurze Zeit erhitzt.

Mit Hilfe von speziellen anionischen polymeren Emulgatoren kann man hochkonzentrierte wäßrige Emulsionen von Homo- und Copolymerisaten des Acrylnitrils mit mittleren Teilchendurchmessern von 100 bis 300 nm herstellen (vgl. Deutsche Patentanmeldung P 42 33 026.2). Die Molekulargewichte der nach diesem speziellen Emulsionspolymerisationsverfahren erhaltenen Polymerisate liegen im Bereich von 5 · 10⁵ bis 1 · 10⁷ g/Mol, bevorzugt von 2 · 10⁶ bis 5 · 10⁶ g/Mol. Werden diese wäßrigen Acrylnitrilpolymerisatemulsionen mit wäßrigen Lösungen von Alkalihydroxiden behandelt, dann findet bei 50 bis 100°C, bevorzugt bei 70 bis 95°C, innerhalb kurzer Zeit eine Umwandlung von Nitrilgruppen in Carboxylat- und Carbonamidgruppen statt. Durch geeignete Reaktionsführung können unlösliche, jedoch in Wasser stark quellbare Pulver mit äußerst günstigen superabsorbierenden Eigenschaften erhalten werden. Die Unlöslichkeit dieser Produkte in Wasser, die für deren Quellvermögen von entscheidender Bedeutung ist, wird durch ein ausgewogenes Verhältnis an Carboxylat- und Carbonamidgruppen einerseits zu nicht umgesetzten Nitrilgruppen andererseits bewirkt.

Die Herstellung der als Ausgangsprodukte benötigten wäßrigen Emulsionen von hochmolekularen Homo- oder Copolymerisaten des Acrylnitrils ist beispielsweise in der Deutschen Patentanmeldung P 42 33 026.2 beschrieben. Nach diesem Verfahren, das in Gegenwart eines polymeren anionischen Emulgators durchgeführt wird, und zu feinteiligen (mittlerer Teilchendurchmesser 100 bis 300 nm, ermittelt durch Laser-Korrelations-Spektroskopie) Polymerisatemulsionen mit sehr hohen Molekulargewichten führt, können die Ausgangsmaterialien zur Herstellung der erfindungsgemäßen superabsorbierenden Polymerisate gewonnen werden. Ihre mittleren Molekulargewichte (Gewichtsmittel, ermittelt durch Gelpermeationschromatographie) sind 5 · 10⁵ g/Mol bis 1 · 10⁷ g/Mol, bevorzugt 2 · 10⁶ g/Mol bis 5 · 10⁶ g/Mol.

Die beispielsweise nach diesem Verfahren erhaltenen Polymerisatdispersionen können direkt mit den Alkalihydroxiden umgesetzt werden; aufgrund der großen Oberfläche der Polymerisatteilchen sind sehr kurze Reaktionszeiten möglich.

Die Molekulargewichte der Endprodukte liegen höher als die der Ausgangsprodukte, da das Molekulargewicht durch die Hydrolyse zunimmt:

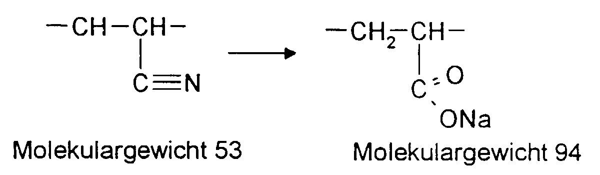

Zur Umsetzung (Hydrolyse) kann man wäßrige, bevorzugt 0,5 bis 10 gew.-%ige Lösungen von Alkalihydroxiden, z.B. NaOH oder KOH verwenden.. Das molare Verhältnis von Nitrilgruppen der Ausgangspolymerisate zu den Hydroxylgruppen der Alkalihydroxide ist bevorzugt 1:0,9 bis 1:0,1, besonders bevorzugt 1:0,7 bis 1:0,3. Produkte mit besonders günstigen anwendungstechnischen Eigenschaften werden erhalten, wenn dieses Verhältnis bei 1:0,5 bis 1:0,4 liegt. Die Hydrolyse wird in der Regel bei 50 bis 100°C, bevorzugt 70 bis 95°C durchgeführt. Der Neutralisationsgrad der bei der Hydrolysereaktion entstehenden Carboxylgruppen kann durch Zugabe von entsprechenden Mengen an Mineralsäuren, wie z.B. HCl, verändert werden. So sind meist zwischen 30 und 100 %, bevorzugt zwischen 50 und 70 %, der Carboxylgruppen im Endprodukt neutralisiert. während die restlichen Carboxylgruppen in der Säureform vorliegen.

Die erforderliche Reaktionszeit hängt von der Reaktionstemperatur und dem gewünschten Hydrolysegrad ab (dieser ist natürlich auch eine Funktion der Reaktionstemperatur). In der Regel werden 20 bis 90 Mol-% der Acrylnitrilreste in den Acrylnitril-Homo- oder -Copolymerisaten in Carboxylat- bzw. Carbonamidgruppen umgewandelt. Durch den Hydrolysegrad kann man die Eigenschaften der superabsorbierenden Polymerisate beeinflussen: Der erreichbare Quellungsgrad steigt mit dem Gehalt an Carboxylgruppen. Gleichzeitig nimmt auch der wasserlösliche Anteil der superabsorbierenden Polymerisate zu, was bei einigen Anwendungen von Nachteil ist. Man muß also empirisch die Reaktionstemperatur, die Reaktionszeit und das Molverhältnis Nitrilgruppen zu Carboxylgruppen im Einzelfall so einstellen, daß Produkte mit den für einen gegebenen Einsatzbereich günstigsten Eigenschaften erhalten werden.

Zur Isolierung der superabsorbierenden Polymerisate in Pulverform gibt man nach Beendigung der Hydrolyse unter starkem Rühren mit Wasser mischbare organische Lösungsmittel, wie Aceton oder Ethanol zu, in einer Menge, die bis zum 3-fachen Volumen des wäßrigen Reaktionsgemischs betragen kann. Bevorzugt wird Ethanol in einem Volumenverhältnis 1:1 eingesetzt. Dabei fallen die superabsorbierenden Polymerisate als feinteilige, leicht filtrierbare Pulver aus. Nach ihrer Trocknung bei 50 bis 100°C können sie durch Sieben nach ihren Korngrößen klassiert werden. Die Korngrößen (mittlerer Durchmesser) sind 50 bis 3.000 µm. Die Eigenschaften der superabsorbierenden Polymerisate, z.B. ihr Quellungsindex sind auch von der Teilchengröße abhängig. Je kleiner die Teilchen, desto schneller wird der Gleichgewichtsquellungszustand erreicht.

Durch nachfolgendes Erhitzen der superabsorbierenden Polymerisate auf 150 bis 250°C, bevorzugt 170 bis 210°C, für 2 bis 30 Minuten, bevorzugt 5 bis 15 Minuten, lassen sich ihre ausgezeichneten anwendungstechnischen Eigenschaften nochmals deutlich verbessern. Dies betrifft insbesondere die Quellungskinetik, d.h. die Absorptionsgeschwindigkeit, und die Gelfestigkeit der gequollenen Polymeren sowie das Aufnahmevermögen für wäßrige Flüssigkeiten unter Druck.

Das Quellungsvermögen der erfindungsgemäßen superabsorbierenden Materialien beträgt in reinem Wasser bis zu 1.000 g/g und in physiologischer Kochsalzlösung (0,9 %ig) bis zu 90 g/g.

Weiterer Gegenstand der Erfindung sind superabsorbierende Polymerisate auf Basis teilhydrolysierter hochmolekularer, linearer Homo- und/oder Copolymerisate des Acrylnitrils, worin 30-60 Mol-% der Nitrilgruppen in Carboxylatgruppen, 20-60 Mol-% der Nitrilgruppen in Carbonamidgruppen umgewandelt und 10-20 Mol-% der Nitrilgruppen unverändert erhalten sind, wobei die unvernetzten Polymerisate ein Quellvermögen von bis zu 1000 g/g in Wasser und bis zu 90 g/g in physiologischer Kochsalzlösung besitzen. Zur Herstellung der superabsorbierenden Polymerisate werden wässerige Emulsionen unvernetzter Acrylnitril(co)polymerisate mit einem mittleren Teilchendurchmesser von 100 bis 300 nm und einem mittleren Molekulargewicht von 5·10⁵ bis 1·10⁷ g/mol verwendet.

Bevorzugt sind solche superabsorbierenden Polymerisate, in denen 40-50 Mol-% der Nitrilgruppen in Carboxylatgruppen und 40-50 Mol-% der Nitrilgruppen in Carbonamidgruppen umgewandelt sind, während 10-20 Mol-% unverändert vorliegen.

### Beispiele

### Beispiel 1

### Herstellung einer hochmolekularen Polyacrylnitril-Emulsion

In einem mit Rührer, Rückflußkühler, Stickstoffeinleitungsrohr und drei Tropftrichtern ausgerüsteten 2 l-Dreihalskolben werden 48,8 g einer 20,5 gew.-%igen wäßrigen Lösung eines Sulfonsäuregruppen enthaltenden anionischen polymeren Emulgators auf Basis eines alternierenden Copolymerisats aus Maleinsäureanhydrid und Diisobutylen (für Einzelheiten siehe DE-OS 38 07 097, Beispiel 2) und 484 g entionisiertes Wasser vorgelegt. Unter Überleiten von Stickstoff und Rühren wird auf 60°C aufgeheizt und die Lösungen I bis III werden innerhalb von 3 Stunden gleichzeitig zudosiert.
- Lösung I:: 200 g Acrylnitril
- Lösung II:: 358 mg Wasserstoffperoxid (35 %ige wäßrige Lösung)
100 g entionisiertes Wasser
- Lösung III:: 203 mg Hydroxymethansulfinsäure, Na-Salz
100 g entionisiertes Wasser

Nach Dosierende wird noch 6 Stunden bei 60°C nachgerührt. Danach werden die Restmonomeren durch Vakuumdestillation entfernt. Nach Filtrieren über ein 100 µm Filtertuch erhält man eine feinteilige Emulsion mit einem Feststoffgehalt von 19 Gew.-%.
Mittlerer Teilchendurchmesser: 150 nm (bestimmt durch Laser Korrelations Spektroskopie))
Viskosität [η] (gemessen in Dimethylformamid bei 25°C): 8,86 dl/g

### Herstellung des superabsorbierenden Polymerisats

In einen 2 l-Vierhalskolben, der mit Rückflußkühler, Thermometer, Tropftrichter und Rührer ausgerüstet ist, werden 279 g der nach Beispiel 1 hergestellten Polyacrylnitrilemulsion und 200 g einer 10 gew.-%igen Natriumhydroxidlösung unter Rühren vorgelegt. Unter Rühren und Überleiten von Stickstoff wird das Reaktionsgemisch auf 95°C erhitzt. Während des Aufheizens ändert sich die Farbe des Polymerisats von farblos über gelb nach dunkelrot, um schließlich wieder farblos zu werden. Nach Erreichen eines Hydrolysegrades von 43 bis 47 % - ermittelt durch quantitative Bestimmung des austretenden Ammoniaks - wird das erhaltene Reaktionsgemisch auf 30 bis 40°C abgekühlt und die nicht verbrauchte Natronlauge durch langsames Zugeben von Salzsäure (innerhalb von 30 bis 60 Minuten) neutralisiert.

Durch portionsweise Zugabe von Ethanol bei 25 bis 30°C wird unter starkem Rühren das superabsorbierende Polymerisat ausgefällt. Dabei beträgt das Volumenverhältnis von Ethanol zu Wasser 1:1. Nach Abfiltrieren und Trocknen im Vakuumtrockenschrank bei 60°C erhält man ca. 90 g eines farblosen Pulvers, das nach Zerkleinern in einem Mixer aus Teilchen eines Durchmessers von 200 bis 3.000 µm besteht. Es kann durch Siebung klassiert werden.

### Thermische Behandlung des superabsorbierenden Polymerisats

Das getrocknete superabsorbierende Polymerisat wird in einem Trockenschrank ca. 15 Minuten bei 180°C gehalten.

### Messung des Quellungsgrades

Es werden ca. 200 mg des superabsorbierenden Polymerisats in ein 300 ml-Becherglas eingewogen und mit 200 ml destilliertem Wasser bzw. 30 ml einer 0,9 %igen Natriumchloridlösung übergossen und bei 20°C stehengelassen. Nach Erreichen des Gleichgewichtsquellungsgrades wird das erhaltene Gel über ein Filtertuch mit der Maschenweite 50 µm abfiltriert und ausgewogen. Der Quellungsgrad berechnet sich dann aus dem Verhältnis Auswaage:Einwaage in g/g. Jede einzelne Bestimmung wird dreimal durchgeführt. Die Messgenauigkeit ist ± 5 %.
Quellungsgrad in Wasser ohne thermische Nachbehandlung 950 g/g, nach thermischer Nachbehandlung 620 g/g
Quellungsgrad in 0,9 %iger Natriumchloridlösung ohne thermische Nachbehandlung 65 g/g, nach thermischer Nachbehandlung 53 g/g

### Beispiele 2 bis 7

Die Ergebnisse der Beispiele 2 bis 7 sind in der Tabelle 1 zusammengefaßt. Für die Beispiele 2 bis 5 wurden die Polyacrylnitrilemulsionen verwendet, die wie in Beispiel 1 angegeben, hergestellt wurden.. Die Spalten 3 bis 5 der Tabelle 1 geben die Grenzviskositätszahlen dieser Polymerisate, die Feststoffgehalte der Emulsionen und die Teilchendurchmesser an.

Beispiel 6 gibt die Ergebnisse wieder, die mit einem durch Fällungspolymerisation hergestellten, kommerziell erhältlichen Polyacrynitril mit [η] = 1,8 (dl/g) (Dralon T® der Bayer AG) erhalten wurden, wobei die Hydrolyse unter denselben Bedingungen wie in den Beispielen 1-5 durchgeführt wurde. Die Ergebnisse in den Spalten 11 und 12 der Tabelle 1 zeigen, daß dieses Polymerisat nicht quillt, sondern sich in destilliertem Wasser bzw. in 0,9 %iger wäßriger Natriumchloridlösung vollständig löst.

Beispiel 7 der Tabelle 1 verwendet ein durch Fällungspolymerisation erhaltenes Polyacrylnitril mit [η] = 8,2 (dl/g), das auf folgende Weise erhalten wurde:

In einem 10 l-Rührreaktor wird folgendes Reaktionsgemisch vorgelegt:

| | |
|---|---|
| 6.000 g | entionisiertes Wasser |
| 30 g | Moviol 26-88 |
| 2.000 g | Acrylnitril |
| 12 g | Azoisobuttersäuredinitril |
| 6,65 g | t-Butylperpivalat (75 %ig) |

Unter Überleiten von Stickstoff wird zunächst 20 Minuten bei 59°C gerührt. Danach senkt man die Temperatur auf 50°C und rührt weitere 120 Minuten bei dieser Temperatur. Nach einer Nachrührzeit von weiteren 50 Minuten bei 50°C wird nach Abkühlen auf Zimmertemperatur vom ausgefallenen Polyacrylnitril abdekantiert, der Niederschlag mehrmals mit entionisiertem Wasser aufgerührt, abfiltriert und im Umluftschrank bei 60°C bis zur Gewichtskonstanz getrocknet.
Ausbeute 1.382 g
[η] (in Dimethylformamid, T = 25°C): 8,2 dl/g

Die Quellungsgrade für dieses Produkt nach seiner Umwandlung in ein superabsorbierendes Polymeres gemäß Beispiel 1 sind in der Tabelle 1 angegeben.

Die Beispiele 1 bis 5 zeigen deutlich die ausgezeichneten anwendungstechnischen Eigenschaften der erfindungsgemäß erhaltenen superabsorbierenden Polymerisate. Wird dagegen Polyacrylnitril in Pulverform als Ausgangsmaterial eingesetzt, dann erhält man entweder keine superabsorbierenden Polymerisate (Beispiel 6) oder die superabsorbierenden Eigenschaften sind wesentlich schlechter (Beispiel 7).

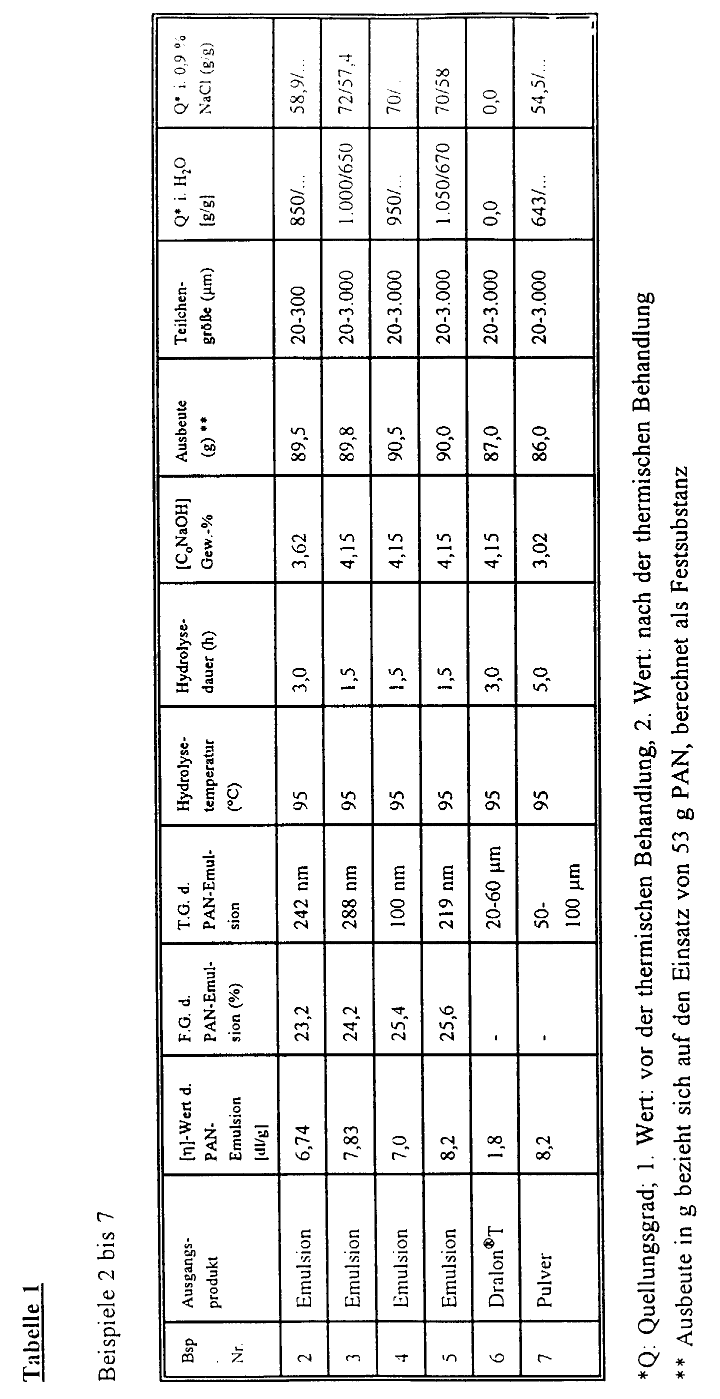

## Patentansprüche

1. Superabsorbierende Polymerisate auf Basis teilhydrolysierter hochmolekularer, linearer Homo- und/oder Copolymerisate des Acrylnitrils, worin 30-60 Mol-% der Nitrilgruppen in Carboxylatgruppen, 20-60 Mol-% der Nitrilgruppen in Carbonamidgruppen umgewandelt und 10-20 Mol-% der Nitrilgruppen unverändert erhalten sind, wobei zur Herstellung der Homo- oder Copolymeren wässerige Emulsionen unvernetzter Acrylnitril(co)polymerisate mit einem mittleren Teilchendurchmesser von 100 bis 300 nm und einem mittleren Molekulargewicht von 5·10⁵ bis 10⁷ g/mol verwendet werden und wobei die unvernetzten Polymerisate ein Quellvermögen von bis zu 1000 g/g in Wasser und bis zu 90 g/g in physiologischer Kochsalzlösung besitzen.

2. Superabsorbierende Polymerisate nach Anspruch 1, in denen 40-50 Mol-% der Nitrilgruppen in Carboxylatgruppen und 40-50 Mol-% der Nitrilgruppen in Carbonamidgruppen umgewandelt sind, während 10-20 Mol-% der Nitrilgruppen unverändert vorliegen.

3. Verfahren zur Herstellung von superabsorbierenden Polymerisaten, dadurch gekennzeichnet, daß man feinteilige wäßrige Emulsionen von unvernetzten Homo- und/oder Copolymerisaten des Acrylnitrils mit einem mittleren Teilchendurchmesser von 100 bis 300 nm und einem mittleren Molekulargewicht von 5·10⁵ bis 1·10⁷ g/mol durch Umsetzung mit wäßrigen Lösungen von Alkalihydroxiden zu Polymerisaten mit 30 bis 60 Mol-% Carboxylatgruppen, 20 bis 60 Mol-% Carbonamidgruppen und 10 bis 20 Mol-% Nitrilgruppen hydrolysiert, die Polymerisate durch Zugabe von mit Wasser mischbaren organischen Lösungsmitteln als Pulver ausfällt, abtrennt, trocknet und dann gegebenenfalls kurze Zeit erhitzt.

4. Verfahren nach Anspruch 3, worin das molare Verhältnis der Nitrilgruppen der Polymerisate zu den Alkalihydroxiden 1:1 bis 1:0,1 ist.

5. Verfahren nach Anspruch 3, worin die Umsetzung bei 50 bis 100°C durchgeführt wird.

6. Verfahren nach Anspruch 3, worin 20 bis 90 Mol-% der Nitrilgruppen des Acrylnitrilpolymerisats in Carboxylat- bzw. Amidgruppen umgewandelt werden.

7. Verfahren nach Anspruch 3, worin zur Ausfällung der Pulver mit Wasser mischbare organische Lösungsmittel eingesetzt werden.

8. Verfahren nach Anspruch 3, worin die ausgefällten Pulver 2 bis 30 Minuten auf 150 bis 250°C erhitzt werden.

9. Verwendung der gemäß Anspruch 3 erhältlichen superabsorbierenden Pulver in Sanitärartikeln, wie z.B. Windeln, als wasserspeichernde Materialien in der Landwirtschaft oder bei der Ummantelung von Elektrokabeln.

## Claims

1. Super-absorbent polymers based on partially hydrolysed, high molecular weight linear homopolymers and/or copolymers of acrylonitrile, in which 30 to 60 mol.% of the nitrile groups are converted into carboxylate groups and 20 to 60 mol.% of the nitrile groups are converted into carbonamide groups and 10 to 20 mol.% of the nitrile groups remain unchanged, wherein, to produce the homopolymers or copolymers, aqueous emulsions of uncrosslinked acrylonitrile (co)polymers with an average particle diameter of from 100 to 300 nm and an average molecular weight of 5·10⁵ to 10⁷ g/mol are used and wherein the uncrosslinked polymers have a swelling capacity of up to 1000 g/g in water and up to 90 g/g in physiological sodium chloride solution.

2. Super-absorbent polymers according to claim 1, in which 40 to 50 mol.% of the nitrile groups are converted into carboxylate groups and 40 to 50 mol.% of the nitrile groups are converted into carbonamide groups, while 10 to 20 mol.% of the nitrile groups remain unchanged.

3. A process for the production of super-absorbent polymers, characterized in that fine-particled aqueous emulsions of uncrosslinked homopolymers and/or copolymers of acrylonitrile with an average particle diameter of from 100 to 300 nm and an average molecular weight of 5·10⁵ to 1·10⁷ g/mol are hydrolysed by reaction with aqueous solutions of alkali metal hydroxides to form polymers with from 30 to 60 mol.% carboxylate groups, 20 to 60 mol.% carbonamide groups and 10 to 20 mol.% nitrile groups and the polymers are precipitated in powder form by the addition of water-miscible organic solvents, separated off, dried and then optionally heated for a short time.

4. A process according to claim 3, in which the molar ratio of the nitrile groups of the polymers to the alkali metal hydroxides is 1:1 to 1:0.1.

5. A process according to claim 3, in which the reaction is carried out at from 50 to 100°C.

6. A process according to claim 3, in which from 20 to 90 mol.% of the nitrile groups of the acrylonitrile polymer are converted into carboxylate or amide groups.

7. A process according to claim 3, in which water-miscible organic solvents are used to precipitate the powders.

8. A process according to claim 3, in which the precipitated powders are heated for 2 to 30 minutes to 150 to 250°C.

9. Use of the super-absorbent powders obtainable according to claim 3 in sanitary articles, such as diapers for example, as water-storing materials in agriculture or in the sheathing of electrical cables.

## Revendications

1. Polymères superabsorbants à base d'homo- et/ou de copolymères de l'acrylonitrile linéaires, à haute masse moléculaire, partiellement hydrolysés, dans lesquels 30 à 60 mol % des groupes nitriles sont convertis en groupes carboxylates, 20 à 60 mol % des groupes nitriles sont convertis en groupes carbonamides et 10 à 20 mol % des groupes nitriles demeurent non modifiés, des émulsions aqueuses de (co)polymères d'acrylonitrile non réticulés ayant un diamètre moyen de particule de 100 à 300 nm et une masse moléculaire moyenne de 5.10⁵ à 1.10⁷ g/mol étant utilisées pour la préparation des homo- ou copolymères et les polymères non réticulés possédant un pouvoir gonflant pouvant atteindre 1 000 g/g dans l'eau et 90 g/g dans une solution physiologique de chlorure de sodium.

2. Polymères superabsorbants selon la revendication 1 dans lesquels 40 à 50 mol % des groupes nitriles sont convertis en groupes carboxylates et 40 à 50 mol % des groupes nitriles sont convertis en groupes carbonamides tandis que 10 à 20 mol % des groupes nitriles sont non modifiés.

3. Procédé de préparation de polymères superabsorbants, caractérisé en ce que l'on hydrolyse des émulsions aqueuses finement divisées d'homo- et/ou de copolymères non réticulés de l'acrylonitrile ayant un diamètre moyen de particule de 100 à 300 nm et une masse moléculaire moyenne de 5.10⁵ à 1.10⁷ g/mol par réaction avec des solutions aqueuses d'hydroxydes alcalins en polymères ayant 30 à 60 mol % de groupes carboxylates, 20 à 60 mol % de groupes carbonamides et 10 à 20 mol % de groupes nitriles, on précipite les polymères sous forme de poudres par addition de solvants organiques miscibles à l'eau, on.les sépare, on les sèche puis on les chauffe éventuellement pendant une courte durée.

4. Procédé selon la revendication 3 dans lequel le rapport molaire des groupes nitriles des polymères aux hydroxydes alcalins est de 1:1 à 1:0,1.

5. Procédé selon la revendication 3 dans lequel la réaction est conduite entre 50 et 100°C.

6. Procédé selon la revendication 3 dans lequel 20 à 90 mol % des groupes nitriles du polymère d'acrylonitrile sont convertis en groupes carboxylates ou amides.

7. Procédé selon la revendication 3 dans lequel des solvants organiques miscibles à l'eau sont utilisés pour la précipitation des poudres.

8. Procédé selon la revendication 3 dans lequel les poudres précipitées sont chauffées pendant 2 à 30 min entre 150 et 250°C.

9. Utilisation des poudres superabsorbantes qui peuvent être obtenues selon la revendication 3 dans des articles sanitaires, comme par exemple des couches, comme matériaux accumulant l'eau en agriculture ou pour l'enrobage de câbles électriques.
